# FASCICULE DE BREVET EUROPEEN

(11) **EP 2 362 392 B1**
(45) Date de publication et mention de la délivrance du brevet: **26.09.2012**
(21) Numéro de dépôt: 11153536.5
(22) Date de dépôt: 07.02.2011
(51) Int. Cl.: G11B 19/02, G06F 17/30, G11B 27/10

(54) **Procédé de navigation dans un contenu sonore**
Navigationsverfahren in einem Tondokument
Method for browsing audio content

(30) Priorité: 15.02.2010 FR 1051030
(43) Date de publication de la demande: 31.08.2011
(73) Titulaire: France Telecom, 75015 Paris (FR)
(72) Inventeur: Le Mer, Pascal, 22700, PERROS GUIREC (FR); Charlet, Delphine, 22300, LANNION (FR); Denjean, Marc, 75020, PARIS (FR); Gonot, Antoine, 75018, PARIS (FR)

(56) Documents cités:
- EP-A2- 0 877 378
- WO-A1-2008/067116
- US-A- 5 031 113
- US-A1- 2002 178 002

## Description

La présente invention concerne un procédé et un système de navigation dans un contenu sonore de type vocal.

La prise de connaissance d'informations contenues dans un corpus de parole nécessite l'écoute complète du signal sonore correspondant. Dans le cas d'un corpus de taille importante, cette opération peut être très consommatrice de temps.

Les techniques de compression temporelle d'un fichier sonore telles que l'accélération, la suppression des portions de signal inutiles (par exemple, les pauses)... ne permettent pas de gagner beaucoup de temps dans la mesure où un contenu n'est plus intelligible dès lors que la compression atteint un facteur "deux".

Des techniques connues permettent de transcrire un signal audio en un texte. Le texte ainsi obtenu peut ensuite être visualisé par exemple sur un écran d'ordinateur et lu par un utilisateur. La lecture d'un texte étant plus rapide que l'écoute, l'utilisateur peut ainsi obtenir plus rapidement des informations qu'il juge pertinente. Cependant, le son est également porteur d'informations qu'il est difficile de quantifier et de représenter par l'image. De telles informations sont par exemple l'expressivité, le genre ou la personnalité du locuteur. Le fichier texte obtenu par cette méthode ne contient pas ces informations. De plus, la transcription automatique de langage naturel engendre de nombreuses erreurs de transcription et le texte obtenu peut être difficile à comprendre par le lecteur.

La demande de brevet FR 0854340 déposée le 27 juin 2008 divulgue un procédé de visualisation d'informations relatives à un message sonore dans lequel d'une part le message sonore est affiché sous forme d'une représentation visuelle chronologique et d'autre part des mots clés sont affichés sous forme textuelle en fonction de leur position chronologique. Les mots clés affichés renseignent l'utilisateur sur le contenu du message.

Ce procédé permet de connaître l'essentiel d'un message, par inspection visuelle, tout en offrant la possibilité d'écouter tout ou partie du message.

Ce procédé n'est pas adapté aux corpus sonores dont la taille est importante. En effet, le nombre de mots affichés est limité, notamment par la taille de l'écran. L'application de cette méthode à un corpus de grande taille ne permet d'afficher qu'un nombre de mots restreint et non représentatif de l'ensemble du contenu. En conséquence, elle ne donne pas un aperçu réel du contenu du corpus.

Une fonction "zoom" permet d'obtenir plus de détails, notamment plus de mots clé, sur une portion de message réduite. Pour connaître l'essentiel du document, l'utilisateur doit balayer l'ensemble du document, c'est-à-dire "zoomer" sur différentes parties du contenu.

Il est aussi connu selon l'art antérieur des techniques de navigation dans un contenu sonore:
Le document US 5,031,113 décrit un système de traitement de texte permettant l'affichage d'une représentation du contenu sonore et la mise en évidence d'un mot restitué.
Le document EP 0 877 378 A2 décrit un système pour l'édition d'enrégistrements vocaux, affichant une représentation graphique du contenu sonore et un index textuel permettant un accès direct au contenu sonore.
Le document US 2002/0178002 A1 décrit une solution permettant de filtrer une transcription et de n'afficher que les occurences d'un mot clé recherché par l'utilisateur.

L'application de cette fonction "zoom" à un grand nombre de tronçons du contenu est longue et fastidieuse car elle nécessite beaucoup de manipulations de la part de l'utilisateur.

De plus, si l'utilisateur souhaite visualiser un tronçon visualisé auparavant, il doit renouveler au moins un certain nombre des opérations de "zoom" effectuées auparavant.

La navigation dans un contenu vocal de grande taille n'est donc pas aisée.

Il existe donc un besoin pour accéder rapidement et simplement à des informations pertinentes d'un contenu vocal de grande taille.

L'invention vient améliorer la situation.

A cet effet, l'invention se rapporte à un procédé de navigation dans un contenu sonore défini dans la revendication 1.

Selon l'invention, au moins un mot clé est stocké en mémoire en association avec au moins deux positions représentatives d'au moins deux instances dudit mot clé dans le contenu sonore, et le procédé comporte :
- une étape d'affichage d'une représentation du contenu sonore;
- lors de la restitution sonore du contenu, une étape de détection d'un extrait courant représentatif d'un mot clé stocké à une première position;
- une étape de détermination d'au moins un deuxième extrait représentatif dudit mot clé et d'une deuxième position en fonction des positions stockées;
- une étape de mise en évidence de la position des extraits dans la représentation du contenu sonore.

Ainsi, lors de l'écoute d'un contenu vocal, une interface graphique met en évidence les différents emplacements d'un mot clé prononcé dans le contenu ou représentatif de l'extrait. L'utilisateur peut ainsi repérer facilement les portions de contenus l'intéressant et demander l'écoute de portions spécifiques.

Selon un mode particulier de réalisation, le procédé de navigation comporte en outre, suite à la réception d'une requête utilisateur, une étape d'arrêt de la restitution sonore en cours suivie d'une étape de restitution sonore du contenu à partir de la deuxième position.

L'utilisateur peut ainsi naviguer rapidement dans le contenu en fonction de ses centres d'intérêt sans avoir à écouter l'ensemble du contenu.

Selon une caractéristique particulière du procédé de navigation, la restitution de l'extrait courant est suivie d'une étape de restitution d'au moins un extrait déterminé.

L'utilisateur a ainsi la possibilité d'entendre successivement les différents extraits représentatifs d'un même mot clé. Une telle navigation ciblée permet un gain de temps pour l'utilisateur.

Selon un mode de réalisation particulier du procédé de navigation, le contenu sonore est représenté sous forme d'un cercle, une position sur ce cercle représentant une position chronologique dans le contenu et l'étape de mise en évidence comporte une étape d'affichage d'un lien entre la première et la deuxième position.

Le cercle est une forme particulièrement adaptée pour visualiser la correspondance entre plusieurs extraits de contenus. Cette forme permet une représentation simple, concise et claire des liens entre les différentes positions des extraits.

Selon un mode de réalisation particulier du procédé de navigation dans lequel le contenu est divisé en segments, la représentation du contenu est une représentation segmentée et l'étape de mise en évidence comprend la mise en évidence du segment contenant l'extrait courant et la mise en évidence d'au moins un segment contenant au moins un deuxième extrait.

Le découpage en segment permet un découpage naturel du contenu, par exemple un découpage en paragraphes, en chapitres ou en sujets traités.

Selon une caractéristique particulière, un segment représenté est sélectionnable par une interface utilisateur.

Le découpage en segments permet ainsi une navigation aisée de l'utilisateur dans le contenu sonore.

Selon un mode de réalisation particulier du procédé de navigation, la restitution du contenu s'effectue sur un ensemble de haut-parleurs situés spatialement sur un cercle, l'extrait courant est restitué sur un premier haut-parleur de l'ensemble et un extrait déterminé est restitué simultanément sur un deuxième haut-parleur de l'ensemble, les haut-parleurs étant sélectionnés en fonction de la position de l'extrait sur le cercle représentant le contenu sonore.

Cet effet de spatialisation du son permet à l'utilisateur d'entendre, en plus de la restitution en cours du contenu sonore, un extrait du contenu relatif au même mot clé. Il a ainsi un aperçu du contenu de l'extrait déterminé et peut, en fonction des éléments entendus, décider ou non de demander à entendre l'extrait sur un seul haut-parleur. L'effet obtenu est comparable à celui entendu par une personne en présence de deux interlocuteurs parlant en même temps.

La spatialisation rend possible la lecture simultanée de plusieurs signaux audio tout en conservant un certain degré d'intelligibilité pour chacun d'eux.

Les différences de position spatiale d'un son facilitent l'écoute sélective. Lorsque plusieurs sons sont audibles simultanément, l'auditeur est en mesure de focaliser son attention sur un seul.

En outre, si seulement deux extraits sonores sont audibles simultanément, les différences de position spatiale peuvent aussi faciliter l'écoute partagée. Il est attendu en conséquence un plus grand confort, une diminution de la charge de travail et une meilleure intelligibilité du contenu lors de l'écoute simultanée.

L'auditeur repère plus facilement un élément sur l'écran si un son lui indique où se trouve cet élément. Le fait que les extraits sont restitués sur des haut-parleurs situés spatialement en correspondance avec la représentation du contenu sonore, facilite l'intelligibilité des contenus diffusés.

La spatialisation du son est utilisée ici pour diffuser simultanément deux parties d'un contenu sonore à deux azimuts distincts, par exemple une première partie du contenu, dans une direction de l'espace, sur un premier haut parleur, et une autre partie du contenu dans une autre direction de l'espace, par exemple sur un deuxième haut parleur, ce qui permet à l'utilisateur d'avoir une idée rapide de la deuxième partie du contenu. Il peut ensuite naviguer dans le contenu et écouter plus attentivement des passages ayant retenu son attention.

Selon une caractéristique particulière, les haut-parleurs sont des haut-parleurs virtuels d'un système de restitution binaurale.

L'effet de spatialisation est ainsi par exemple obtenu à partir d'un casque audio connecté à un dispositif de restitution.

Selon une caractéristique particulière, le niveau sonore du signal émis par le premier haut-parleur est supérieur au niveau sonore du signal émis par le deuxième haut-parleur.

La restitution en cours reste ainsi la principale source sonore.

L'invention se rapporte également à un dispositif de navigation dans un contenu sonore selon la revendication 10 comportant :
- des moyens de stockage d'au moins un mot clé en association avec au moins deux positions représentatives d'au moins deux instances dudit mot clé dans le contenu sonore;
- des moyens d'affichage d'une représentation du contenu sonore;
- des moyens de détection, lors de la restitution sonore du contenu, d'un extrait courant représentatif d'un mot clé stocké à une première position;
- des moyens de détermination d'au moins un deuxième extrait représentatif dudit mot clé et d'une deuxième position en fonction des positions stockées;
- des moyens de mise en évidence de la position des extraits dans la représentation du contenu sonore.

L'invention se rapporte encore à un système de navigation comprenant un dispositif de restitution tel que décrit précédemment et au moins deux haut-parleurs.

L'invention se rapporte enfin à un produit programme d'ordinateur comprenant des instructions pour mettre en oeuvre les étapes du procédé de navigation tel que décrit précédemment, lorsqu'il est chargé et exécuté par un processeur.

D'autres particularités et avantages de la présente invention apparaitront dans la description suivante de modes de réalisation donnés à titre d'exemples non limitatifs, en référence aux dessins annexés, dans lesquels :
- la figure 1 illustre un système de navigation selon un mode de réalisation de l'invention,
- la figure 2 est un organigramme illustrant les différentes étapes d'un procédé de navigation mis en oeuvre dans un système de navigation selon un mode de réalisation,
- la figure 3 est un exemple de représentation d'un contenu vocal obtenue par la mise en oeuvre d'un procédé de navigation selon un mode de réalisation,
- la figure 4 illustre un exemple de métadonnées associées à un contenu sonore selon un premier mode de réalisation,
- les figures 5a et 5b sont des exemples de représentation d'un contenu vocal obtenues par la mise en oeuvre d'un procédé de navigation selon un premier mode de réalisation particulier,
- la figure 6 illustre un exemple de métadonnées associées à un contenu sonore selon un deuxième mode de réalisation,
- la figure 7 illustre une représentation d'un contenu vocal obtenue par la mise en oeuvre d'un procédé de navigation selon un deuxième mode de réalisation,
- la figure 8 illustre un exemple d'interface graphique.

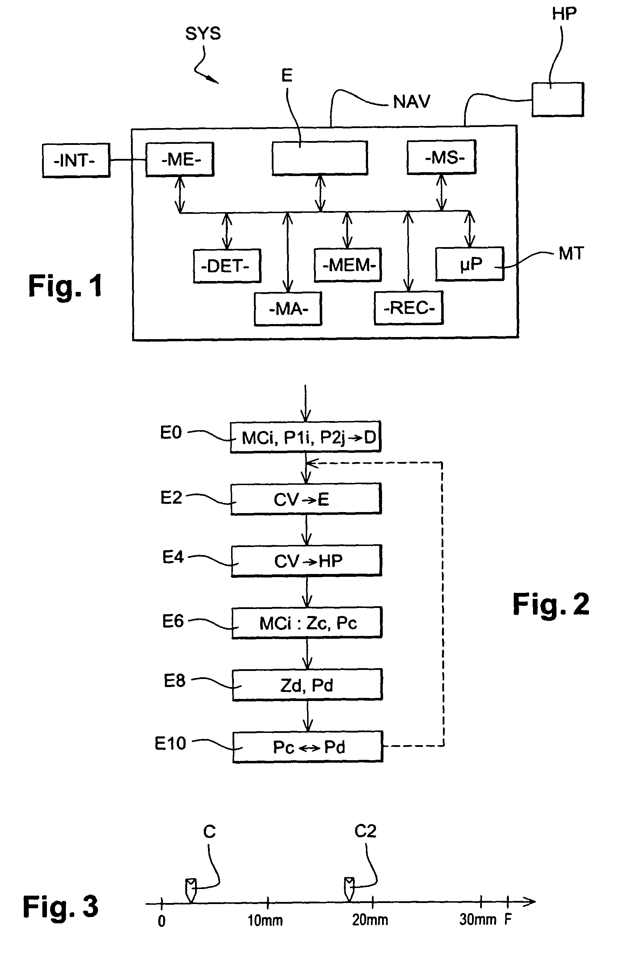

Un mode de réalisation de l'invention va maintenant être décrit en référence aux figures 1 à 3.

La figure 1 représente un système de navigation SYS selon un mode de réalisation de l'invention.

Le système SYS comprend un dispositif de navigation NAV et un système de restitution sonore HP.

Le système de restitution sonore HP comprend par exemple des moyens de restitution sonore de type haut-parleur.

Dans le mode de réalisation illustré ici, le système de restitution HP est séparé et relié au dispositif NAV.

A titre d'alternative, le système de restitution sonore HP est intégré au dispositif NAV.

Le dispositif NAV est par exemple un ordinateur de type PC.

Typiquement, le dispositif NAV peut être intégré dans un ordinateur, un terminal de communication tel qu'un téléphone mobile, un décodeur TV connecté à un téléviseur ou plus généralement tout équipement multimédia.

Ce dispositif NAV comporte une unité de traitement MT munie d'un microprocesseur, reliée à une mémoire MEM. L'unité de traitement MT est pilotée par un programme informatique PG. Le programme informatique PG comporte des instructions de programme adaptées à mettre en oeuvre notamment un procédé de navigation selon un mode de réalisation de l'invention décrit ultérieurement en référence à la figure 2.

L'unité de traitement MT est apte à recevoir via un module d'entrée ME, des instructions d'une interface utilisateur INT, par exemple une souris d'ordinateur ou tout autre moyen de sélection par l'utilisateur sur l'écran de visualisation.

Ce dispositif NAV comporte également un écran de visualisation E et un module d'affichage MA pour l'affichage sur l'écran de visualisation E.

Il comporte également un module de restitution du son MS pour la diffusion d'un contenu vocal sur le système de restitution sonore HP.

Le dispositif NAV comporte également un module de détection de mots clés REC et un module de détermination DET d'extraits sonores représentatifs de mots clés.

Un contenu sonore CV et des métadonnées associées D ont été enregistrés dans la mémoire MEM.

Les métadonnées sont par exemple enregistrées sous la forme d'un fichier de métadonnées dans la mémoire MEM.

Le contenu sonore CV est un contenu audio contenant au moins un signal de parole.

Un mode de réalisation du procédé de navigation dans le système SYS va maintenant être décrit en référence à la figure 2.

Lors d'une étape préalable d'indexation E0, des mots clés MCi sont déterminés pour le contenu vocal CV. Un mot clé représente ici un mot ou en ensemble de mots représentatif d'un moins deux extraits de contenu. Un mot clé est un identifiant de contenu.

Chaque mot clé déterminé MCi est ensuite enregistré dans un fichier de métadonnées D de la mémoire MEM, en association avec au moins deux positions Pli, P2j du mot-clé MCi dans le contenu sonore CV.

Par exemple, le fichier de métadonnées D contient un mot clé MC1 en association avec une première position P11 et une deuxième position P12 et un mot clé MC2 en association avec une première position P21 et une deuxième position P22.

La détermination des mots clés est par exemple réalisée selon un processus consistant à convertir le contenu sonore en une transcription textuelle à l'aide d'un algorithme classique de "Speech to Text", à effectuer une segmentation thématique et à extraire des mots clés sur les segments.

La segmentation thématique est par exemple effectuée par détection dans la courbe représentant le signal audio du contenu de pics représentant la similitude entre deux mots ou groupe de mots. Une telle méthode de mesure de degré de similarité est par exemple décrite dans un document de G. Salton, J. Allan, C. Buckley et A. Singhal intitulé "Automatic analysis, theme generation and summarization of machine-readable texts" de 1994.

L'extraction des mots clés sur les segments est par exemple fondée sur la fréquence relative des mots ou groupe de mots dans le segment.

L'étape préalable E0 est réalisée une seule fois pour le contenu sonore CV.

A titre d'alternative, l'étape préalable E0 est déterminée par un dispositif d'indexation (non représenté) et le fichier de métadonnées D associé au fichier CV est transmis au dispositif NAV par le dispositif d'indexation via par exemple un réseau de télécommunication.

Encore à titre d'alternative, les métadonnées D sont déterminées par une analyse éditoriale manuelle du contenu sonore CV effectuée par un opérateur.

Lors d'une étape E2, le module d'affichage MA affiche une représentation du contenu vocal CV sur l'écran E.

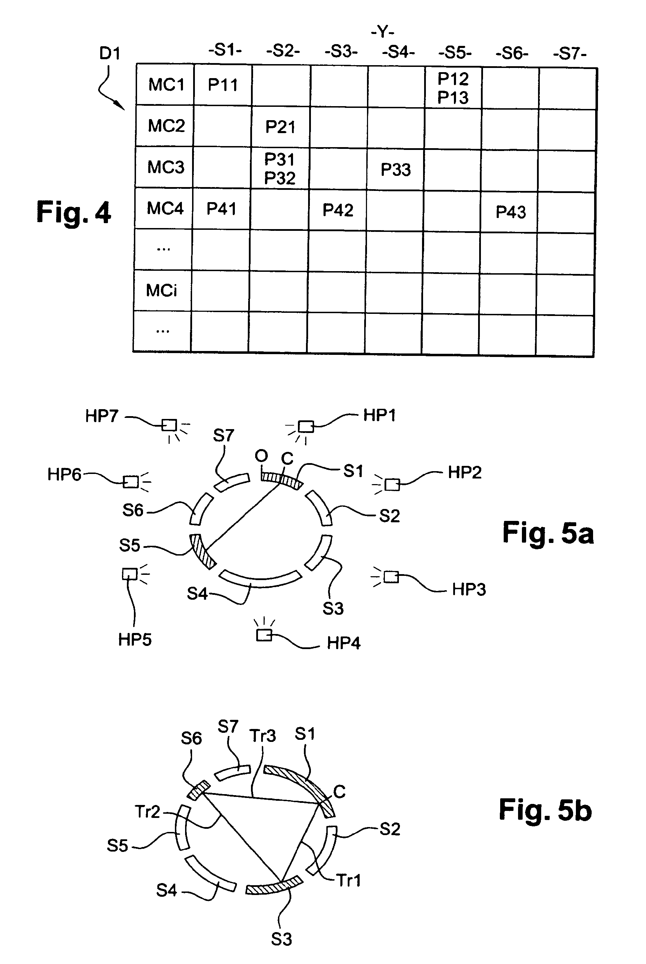

Les figures 3 et 5a illustrent des exemples de représentation du contenu vocal CV.

Dans le mode de réalisation décrit à la figure 3, le contenu vocal CV est représenté par un axe temporel chronologique horizontal. Le début du contenu est représenté par le repère O et la fin du contenu est représentée par le repère F. Des repères intermédiaires indiquent le délai calculé depuis le début O.

Lors d'une étape E4, le module MS commande la restitution sonore du contenu vocal CV à partir du repère O, sur le système de restitution sonore HP.

A titre d'alternative, la restitution sonore peut être commencée à partir d'un autre endroit du contenu vocal.

Un curseur C indique la position courante de restitution.

Lors d'une étape E6, le module de détection REC détecte qu'un mot clé MCi présent dans le fichier de métadonnées D est prononcé ou que l'extrait courant Zc prononcé est représentatif du mot clé MCi. La position Pc de l'extrait courant Zc correspond à une des positions enregistrées en association avec le mot clé MCi dans le fichier de métadonnées D.

Par exemple, l'extrait courant Zc, situé à la position P11, est représentatif du mot clé MC1.

Cette étape de détection E6 consiste par exemple à comparer la position courante Pc du curseur C avec les positions enregistrées dans le fichier de métadonnées D.

Un extrait est représentatif d'un mot clé s'il contient ce mot clé ou si l'extrait et le mot clé sont des dérivés d'un même lemme, le lemme étant la forme du mot que l'on trouve en entrée d'un dictionnaire (verbe à l'infinitif, nom singulier, adjectif au masculin singulier)

Par exemple, les mots "mangé", "mangeront" sont des dérivés du lemme "manger".

A titre d'alternative, un extrait est représentatif d'un mot clé s'il a la même signification dans le contexte.

Par exemple, le terme "hexagone" est significatif du mot "France" si le contexte concerne le pays.

Lors d'une étape E8, le module de détermination DET détermine, par lecture dans le fichier de métadonnées D, au moins un deuxième extrait Zd, représentatif du mot clé MCi et une position Pd pour chaque deuxième extrait Zd déterminé. Une position Pd d'un extrait Zd représente une deuxième position.

Dans l'exemple particulier où l'extrait courant Zc, à la position P11, représente le mot clé MC1, un seul deuxième extrait Zd est déterminé et sa position est P12.

Puis lors d'une étape E10, la position Pc de l'extrait courant Zc et la position Pd du ou des deuxièmes extraits Zd sont mises en évidence sur l'écran E par les moyens d'affichage MA, par exemple en les affichant avec une couleur différente ou en surbrillance.

Dans l'exemple particulier décrit, les positions P11 et P12 sont mises en évidence.

A titre d'alternative, le mot clé MC1 est également affiché sur l'écran E.

Ainsi, l'utilisateur entendant un extrait représentatif du mot clé MC1, est averti qu'un autre extrait représentatif du même mot clé MC1 est présent à une autre position du contenu sonore CV.

Il peut alors poursuivre l'écoute du contenu sonore ou demander la restitution du contenu à partir de la position Pd ou à partir d'une position P précédent la position Pd pour entendre le contexte lié au deuxième extrait Zd.

S'il poursuit l'écoute, les étapes E2 à E10 sont réitérées avec le mot clé suivant, par exemple le mot clé MC2.

Le procédé peut aussi prévoir une restitution successive des extraits déterminés, de façon automatique ou à la demande de l'utilisateur ou encore une restitution simultanée des extraits déterminés par exemple sur un système de restitution spatialisé comme décrit ultérieurement en référence la figure 5a.

Un premier mode de réalisation particulier va maintenant être décrit en référence aux figures 4 et 5a.

Dans ce mode de réalisation, le système de restitution sonore HP comprend un ensemble de 7 haut-parleurs HP1, HP2...HP7 reliés au dispositif NAV et répartis spatialement autour de ce dispositif.

Par exemple, les haut-parleurs sont répartis sur un cercle virtuel autour du dispositif.

A titre d'alternative, le système SYS comprend un nombre différent de haut-parleurs.

Dans ce mode de réalisation, le contenu sonore CV est divisé en segments, par exemple 7 segments S1, S2...S7. Un segment est une sous partie du contenu, par exemple, une sous partie thématique.

Dans le mode de réalisation décrit, un fichier de métadonnées D1 a été enregistré en mémoire. Dans ce fichier de métadonnées D1, une position correspond à un identifiant de segment et à une position chronologique par rapport au début du segment.

La figure 4 représente un exemple de fichier de métadonnées D1 pour le contenu vocal CV.

Le mot clé MC1 est par exemple enregistré en association avec une position P11 dans le segment S1 et avec deux positions P12 et P13 dans le segment S5. Le mot clé MC3 est par exemple enregistré en association avec deux positions P31 et P32 dans le segment S2 et avec une position P33 dans le segment S4.

Un même mot clé peut être représenté une seule fois ou plusieurs fois dans un même segment.

La figure 5a illustre un exemple de représentation du contenu vocal CV.

Le contenu vocal CV est représenté par un axe temporel chronologique qui a la forme d'un cercle. Les segments S1 à S7 sont répartis sur le cercle. Le début du contenu est représenté par le repère O situé sur le segment S1.

La longueur des segments est par exemple proportionnelle à leur durée de restitution sonore.

Lors de la restitution sonore, le haut-parleur sur lequel est diffusé le contenu sonore CV est le haut-parleur associé au segment restitué.

Un haut-parleur est associé à un segment en fonction de la position du segment sur le cercle affiché sur l'écran, de la position du haut-parleur et de la répartition spatiale des haut-parleurs de l'ensemble des haut-parleurs.

Dans le mode de réalisation décrit ici où le nombre de segments est égal au nombre de haut-parleurs, chaque haut-parleur est associé à un seul segment.

A titre d'alternative, un haut-parleur est associé à plusieurs segments.

Encore à titre d'alternative, un segment est associé à plusieurs haut-parleurs. Cette alternative est particulièrement adaptée au cas où un des segments est plus long que les autres.

Lors de la restitution d'un segment, les mots clé d'un segment sont lus en mémoire dans le fichier de métadonnées D1 et affichés sur l'écran E.

Le segment courant, c'est-à-dire le segment en cours de restitution est mis en évidence sur l'écran E, par exemple par l'utilisation d'une couleur déterminée, les autres segments étant d'une autre couleur.

Un curseur C indique la position courante de restitution sur le cercle.

La figure 5a illustre un exemple de représentation dans lequel le curseur C est en position P1 du segment S1.

L'extrait courant prononcé Zc est alors représentatif du mot clé MC1.

Deux extraits Z2 et Z3 se situant respectivement aux positions P12 et P13 du segment S5 sont déterminés. Les extraits Z2 et Z3, représentatifs du mot clé MC1, représentent des deuxièmes extraits.

Les positions P12 et P13 dans le segment S5 représentent ici des deuxièmes positions.

Comme illustré sur la figure 5a, le segment S5 associé à l'extrait Z2 est mis en évidence par utilisation d'une couleur déterminée ou par surbrillance, clignotement...et un trait est affiché entre la position P11 du segment S1 de l'extrait courant Zc et la position P12 dans le segment S5 du deuxième extrait Z2.

Ainsi, l'utilisateur entendant le mot clé MC1, est averti visuellement qu'un mot clé similaire est présent à la position P12 du segment S5.

Dans le mode de réalisation décrit, lorsque plusieurs extraits correspondant au mot clé sont représentés dans un même autre segment, seule la position du premier extrait déterminé est retenue.

En parallèle de la restitution du contenu sonore, le deuxième extrait Z2 est restitué sur le haut-parleur HP5 associé au segment S5 selon une technique de spatialisation du son.

Ainsi, les deux extraits Zc et Z2 seront localisés à deux positions différentes dans l'espace sonore.

L'utilisateur peut alors poursuivre l'écoute du contenu sonore CV ou demander la restitution du contenu CV à partir de la position P12 du segment S5 ou à partir d'une autre position dans le fichier, par exemple une position P précédent la position P12 pour entendre le contexte lié au deuxième extrait Z2.

Une telle navigation dans le contenu peut être effectuée par positionnement du curseur, par déplacement circulaire du doigt ou en pointant directement sur un segment ou encore par utilisation de fonctions de saut au moyen de boutons spécifiques.

Le curseur permet à l'utilisateur de déterminer de façon précise la position à partir de laquelle il souhaite entendre le contenu vocal.

Le déplacement circulaire du doigt permet de commander une avance ou un retour rapide dans le contenu.

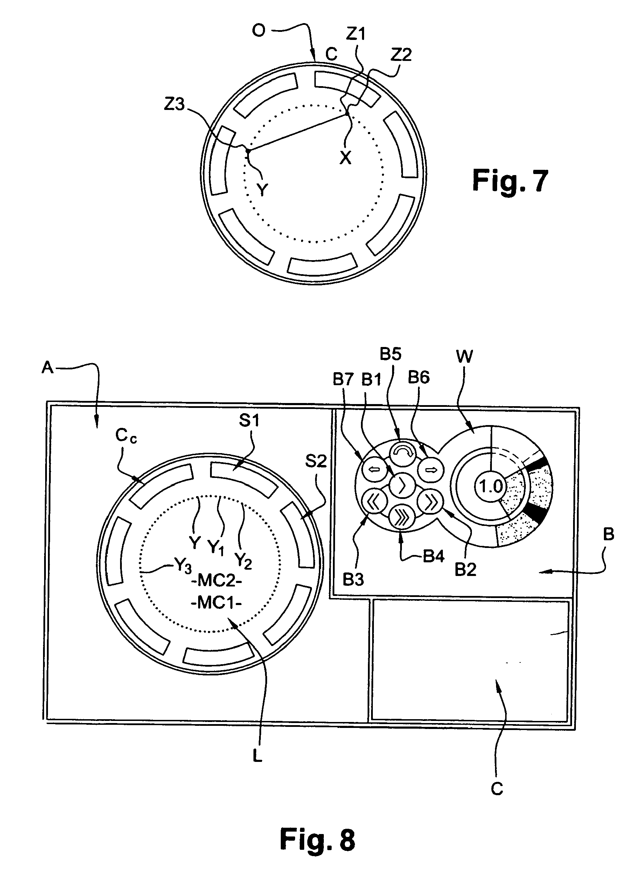

Un exemple d'interface graphique offrant une navigation aisée est décrit dans la suite de la description en référence à la figure 8.

L'utilisateur peut également commander l'accélération de l'écoute par écoute sélective. Par exemple, il peut obtenir la restitution des phrases contenant uniquement des mots clés, voir uniquement les mots clés.

La figure 5b illustre un exemple de représentation du contenu sonore CV lorsque l'extrait courant Zc prononcé est représentatif du mot clé MC4. Des extraits Z3 et Z4 respectivement à la position P42 dans le segment S3 et à la position P43 dans le segment S6 sont alors déterminés.

Le segment courant S1 ainsi que les segments S3 et S6 sont mis en évidence, par exemple par surbrillance. Trois traits Tr1, Tr2 et Tr3 mettent en évidence la position des extraits Zc, Z3 et Z4.

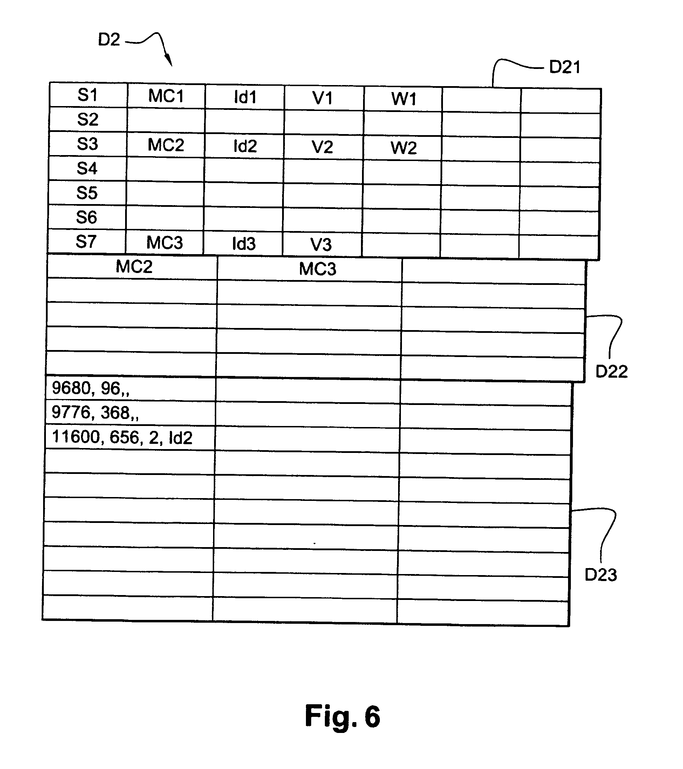

Un deuxième mode de réalisation particulier du procédé de navigation mis en oeuvre dans le système SYS va maintenant être décrit en référence aux figures 6 et 7.

La figure 6 représente un deuxième exemple de fichier de métadonnées D2 pour le contenu vocal CV.

Dans cet exemple, le fichier de métadonnées D2 comprend 3 parties D21, D22 et D23.

La première partie D21 contient, pour chaque segment du contenu vocal CV, les mots clé représentatifs du segment et, en association avec chaque mot clé, un identifiant du mot clé dans le segment et au moins deux positions. Une position est ici la position d'un mot ou d'un groupe de mots représentant le mot clé associé.

Dans ce mode de réalisation, un mot clé est représentatif d'un segment s'il est représenté au moins deux fois dans le segment

Par exemple, dans le segment S1, le mot clé MC1 ayant pour identifiant Id1 est associé aux positions V1 et W1. Dans le segment S3, le mot clé MC2 ayant pour identifiant Id2 est associé aux positions V2 et W2. Dans le segment S7, le mot clé MC3 ayant pour identifiant Id3 est associé à la position V3.

La deuxième partie D22 contient les correspondances entre mots clés, et plus précisément les correspondances entre identifiants de mots clé.

Par exemple, les identifiants Id2 et Id3 sont mis en correspondance dans la partie D22 signifiant que les mots MC2 et MC3 sont représentatifs d'un même mot clé.

La troisième partie D23 contient l'ensemble des extraits du contenu sonore CV représentés sous forme de quadruplets. Chaque quadruplet contient une position de début d'extrait dans le contenu sonore, sa durée, un identifiant de segment et un identifiant de mot clé. Les valeurs "identifiant de segment" et " identifiant de mot clé" sont vides ou nulles si l'extrait n'est pas représentatif d'un mot clé.

Par exemple, l'extrait débutant à la position 11600ms et de durée 656ms est un extrait représentatif du mot clé ayant pour identifiant Id2 dans le segment S2.

Lors de la restitution d'un segment du contenu sonore CV, sur un des haut-parleurs de l'ensemble, des mots clés représentatifs du segment restitué sont affichés.

Lors de la restitution d'un segment du contenu sonore CV, sur un des haut-parleurs de l'ensemble des haut-parleurs, les mots clé dudit segment, par exemple MC2 pour le segment S3, sont lus en mémoire dans le fichier de métadonnées D2 et affichés sur l'écran E.

Le segment courant est mis en évidence.

Lorsque l'extrait courant Zc prononcé est représentatif du mot clé MC2, des extraits Z2 et Z3, représentatifs du mot clé MC2 sont déterminés. L'extrait Z2 est déterminé par lecture dans la partie D21 du fichier de métadonnées D2 et l'extrait Z3 du segment S7 est déterminé par lecture de la deuxième partie D22 du fichier de métadonnées D2.

Les positions respectives W2 et V3 des extraits Z2 et Z3 sont lues dans le fichier de métadonnées D2.

La position V2 de l'extrait courant Zc et les positions W2 et V3 des extraits Z2 et Z3 sont mises en évidence sur l'écran E.

Par exemple, comme illustré sur la figure 7, la mise en évidence consiste à relier les positions des extraits Zc et Z2 à un point X représentatif du mot clé MC2, à relier la position V3 de l'extrait Z3 à un point Y représentatif du mot clé MC3 (équivalent à MC2) et à relier les points X et Y.

En parallèle de la restitution du contenu sonore, l'extrait Z3 est restitué sur le haut-parleur associé au segment S7 selon une technique de spatialisation du son.

Dans le mode de réalisation décrit, le système comprend un ensemble de 7 haut-parleurs répartis géographiquement sur un cercle autour de l'écran.

A titre d'alternative, le système SYS comprend un dispositif D2 tel que décrit précédemment et un casque pour une restitution binaurale. Les haut-parleurs du système de restitution sont alors des haut-parleurs virtuels de cette restitution binaurale.

Un mode de réalisation de l'étape de spatialisation du son va maintenant être décrit.

On suppose que deux mots clés ont été détectés pour le mot clé prononcé.

On a ainsi trois signaux de parole à restituer sur trois haut-parleurs. Le signal en cours de restitution est le signal principal. Les autres signaux sont des signaux secondaires.

Le signal principal est restitué sur un haut-parleur des haut-parleurs de l'ensemble, le haut-parleur étant sélectionné en fonction de la position courante dans la restitution du contenu. Ce signal principal est entendu à un azimut correspondant à sa position sur le cercle de représentation sonore.

Les signaux secondaires sont restitués successivement, selon leur ordre d'occurrence dans le contenu vocal, en même temps que le signal principal. Une telle restitution successive des signaux secondaires permet que les signaux restitués, c'est-à-dire le signal principal et un des signaux secondaires, soient davantage compréhensibles par l'utilisateur. Le nombre de signaux restitués simultanément est ainsi limité à deux.

Les signaux secondaires sont entendus à un azimut correspondant à leur position sur le cercle de représentation sonore.

A titre d'alternative, le signal principal et les signaux secondaires sont restitués simultanément.

Le rapport champ direct/champ réverbéré des signaux secondaires est diminué de quelques décibels par rapport au rapport champ direct/champ réverbéré du signal principal. Outre l'effet de création d'une différence de niveau sonore entre les deux sources, ce traitement permet une sensation plus stable de distance et en conséquence, une mise en arrière plan des signaux secondaires plus perceptible.

La sensation d'arrière plan ainsi donnée aux signaux secondaires, permet également de maintenir une plus grande intelligibilité du signal principal et de diminuer la dispersion de l'audition auditive.

Un filtre passe haut du second ordre est appliqué aux signaux secondaires. La fréquence de coupure de ce filtre est par exemple comprise dans l'intervalle [1kHz ; 2kHz]. La limitation du « chevauchement » fréquentiel du signal principal et du signal secondaire ainsi obtenu permet une différenciation de timbre entre les signaux restitués.

Un processus de désynchronisation des signaux est également appliqué. Ce processus consiste à déterminer si le début de restitution d'un mot du signal principal coïncide avec un mot en cours de restitution du signal secondaire. Dans le cas où ce moment coïncide avec une absence de signal secondaire (espace entre mots), l'intervalle temporel entre le début du mot restitué du signal principal et le début du mot à restituer du signal secondaire est déterminé. Si cet espace temporel est inférieur à un seuil prédéterminé, la restitution du mot à restituer du signal secondaire est retardée. Le seuil prédéterminé est préférentiellement compris entre 100ms et 300 ms.

A titre d'alternative, le processus de désynchronisation des signaux n'est pas appliqué.

La mise en évidence de la relation entre les positions d'un même mot clé lors de la restitution sonore permet une navigation aisée dans le contenu sonore par un utilisateur en fonction de ses centres d'intérêt.

La figure 8 illustre un exemple d'interface graphique G permettant une navigation dans le contenu sonore CV.

Dans une première fenêtre A, un cercle Cc représentant le contenu vocal CV est affiché. Le cercle Cc est découpé en différents segments S1, S2...Les mots clé ou lemmes associés au contenu vocal CV sont affichés sous forme d'une liste déroulante L dans le centre du cercle Cc. Chaque mot clé d'un segment est représenté par un point Y situé le long du cercle Cc en fonction de la position du mot clé dans un contenu sonore.

Par exemple, le mot clé MC1 affiché au centre du cercle est également représenté par les points Y1, Y2 et Y3.

Une deuxième fenêtre B contient les boutons de commande pour la lecture et la navigation dans le contenu sonore.

Un bouton B1 permet de commander la lecture.

Un bouton B2 permet de déplacer le curseur au mot clé suivant.

Le bouton B3 permet de déplacer le curseur au mot clé précédent.

Un bouton B4 permet de déplacer le curseur au début du segment suivant ou du segment précédent.

Un bouton B5 permet de sélectionner un mode dans lequel seules les phrases contenant des mots clés sont lues.

Un bouton B6 permet de déplacer le curseur à l'instance suivante d'un mot clé.

Un bouton B7 permet de déplacer le curseur à l'instance précédente d'un mot clé.

Le déplacement du curseur à une instance d'un mot clé peut également se faire en sélectionnant un mot clé dans la liste déroulante avec la souris ou à l'aide d'un écran tactile.

Une interface graphique W permet également de sélectionner la vitesse de lecture du contenu.

Une troisième fenêtre peut contenir des informations relatives au contenu sonore, par exemple une date ou une durée du contenu.

La navigation dans le contenu sonore peut également être effectuée par saisie d'un mouvement, par exemple un arc de cercle dans un sens ou dans l'autre, effectué par l'utilisateur sur l'écran de visualisation E.

## Revendications

1. Procédé de navigation dans un contenu sonore (CV) **caractérisé en ce que**, au moins un mot clé (MC1) est stocké en mémoire en association avec au moins deux positions (P11, P12) représentatives d'au moins deux instances dudit mot clé dans le contenu sonore, et **en ce qu'**il comporte :
- une étape d'affichage (E2) d'une représentation du contenu sonore;
- lors de la restitution sonore du contenu, une étape de détection (E6) d'un extrait courant (Zc) représentatif d'un mot clé (MC1) stocké à une première position (P11);
- une étape de détermination (E8) d'au moins un deuxième extrait (Zd) représentatif dudit mot clé et d'une deuxième position (P12) en fonction des positions stockées;
- une étape de mise en évidence (E10) de la position des extraits dans la représentation du contenu sonore.

2. Procédé de navigation selon la revendication 1 **caractérisé en ce que**, suite à la réception d'une requête utilisateur, il comporte en outre une étape d'arrêt de la restitution sonore en cours suivie d'une étape de restitution sonore du contenu à partir de la deuxième position.

3. Procédé de navigation selon la revendication 1 **caractérisé en ce que** la restitution de l'extrait courant est suivie d'une étape de restitution d'au moins un extrait déterminé.

4. Procédé de navigation selon la revendication 1 **caractérisé en ce que** le contenu sonore est représenté sous forme d'un cercle, une position sur ce cercle représentant une position chronologique dans le contenu et **en ce que** l'étape de mise en évidence comporte une étape d'affichage d'un lien entre la première et la deuxième position.

5. Procédé de navigation selon la revendication 1 **caractérisé en ce que** le contenu étant divisé en segments, la représentation du contenu est une représentation segmentée et l'étape de mise en évidence comprend la mise en évidence du segment contenant l'extrait courant et la mise en évidence d'au moins un segment contenant au moins un deuxième extrait.

6. Procédé de navigation selon la revendication 5 **caractérisé en ce qu'**un segment représenté est sélectionnable par une interface utilisateur.

7. Procédé de navigation selon la revendication 4 dans lequel la restitution du contenu s'effectue sur un ensemble de haut-parleurs situés spatialement sur un cercle, **caractérisé en ce que** l'extrait courant est restitué sur un premier haut-parleur de l'ensemble, un extrait déterminé est restitué simultanément sur un deuxième haut-parleur de l'ensemble, les haut-parleurs étant sélectionnés en fonction de la position de l'extrait sur le cercle représentant le contenu sonore.

8. Procédé de navigation selon la revendication 7 **caractérisé en ce que** les haut-parleurs sont des haut-parleurs virtuels d'un système de restitution binaurale.

9. Procédé de navigation selon la revendication 7 **caractérisé en ce que** le niveau sonore du signal émis par le premier haut-parleur est supérieur au niveau sonore du signal émis par le deuxième haut-parleur.

10. Dispositif de navigation (NAV) dans un contenu sonore (CV) **caractérisé en ce qu'**il comporte
- des moyens de stockage (MEM) d'au moins un mot clé (MC1) en association avec au moins deux positions (P11, P12) représentatives d'au moins deux instances dudit mot clé dans le contenu sonore;
- des moyens d'affichage (MA) d'une représentation du contenu sonore;
- des moyens de détection (REC), lors de la restitution sonore du contenu, d'un extrait courant (Zc) représentatif d'un mot clé stocké à une première position (P11);
- des moyens de détermination (DET) d'au moins un deuxième extrait (Zd) représentatif dudit mot clé et d'une deuxième position (P12) en fonction des positions stockées;
- des moyens de mise en évidence (MA) de la position des extraits dans la représentation du contenu sonore.

11. Système de navigation (SYS) comprenant un dispositif de restitution conforme à la revendication 10 et au moins deux haut-parleurs.

12. Produit programme d'ordinateur comprenant des instructions pour mettre en oeuvre les étapes du procédé de navigation selon la revendication 1, lorsqu'il est chargé et exécuté par un processeur.

## Claims

1. Method for browsing in an audio content (CV) **characterized in that** at least one keyword (MC1) is stored in memory in association with at least two positions (P11, P12) representative of at least two instances of said keyword in the audio content, and **in that** it comprises:
- a step (E2) of displaying a representation of the audio content;
- during the audio playback of the content, a step (E6) of detecting a current extract (Zc) representative of a keyword (MC1) stored in a first position (P11);
- a determination step (E8) of at least one second extract (Zd) representative of said keyword and of a second position (P12) as a function of the stored positions;
- a step (E10) of highlighting the position of the extracts in the representation of the audio content.

2. Browsing method according to Claim 1, **characterized in that**, following the receipt of a user request, it also comprises a step of stopping the current audio playback followed by a step of audio playback of the content from the second position.

3. Browsing method according to Claim 1, **characterized in that** the playback of the current extract is followed by a step of playing back at least one determined extract.

4. Browsing method according to Claim 1, **characterized in that** the audio content is represented in the form of a circle, a position on this circle representing a chronological position in the content and **in that** the highlighting step comprises a step of displaying a link between the first and the second positions.

5. Browsing method according to Claim 1, **characterized in that**, the content being divided into segments, the representation of the content is a segmented representation and the highlighting step comprises the highlighting of the segment containing the current extract and the highlighting of at least one segment containing at least one second extract.

6. Browsing method according to Claim 5, **characterized in that** a represented segment can be selected via a user interface.

7. Browsing method according to Claim 4, in which the content is played back on a set of loudspeakers situated spatially on a circle, **characterized in that** the current extract is played back on a first loudspeaker of the set, a determined extract is played back simultaneously on a second loudspeaker of the set, the loudspeakers being selected as a function of the position of the extract on the circle representing the audio content.

8. Browsing method according to Claim 7, **characterized in that** the loudspeakers are virtual loudspeakers of a binaural playback system.

9. Browsing method according to Claim 7, **characterized in that** the audio level of the signal emitted by the first loudspeaker is greater than the audio level of the signal emitted by the second loudspeaker.

10. Device (NAV) for browsing in an audio content (CV), **characterized in that** it comprises
- means (MEM) for storing at least one keyword (MC1) in association with at least two positions (P11, P12) representative of at least two instances of said keyword in the audio content;
- means (MA) for displaying a representation of the audio content;
- means (REC) for detecting, during the audio playback of the content, a current extract (Zc) representative of a keyword stored in a first position (P11);
- determination means (DET) of at least one second extract (Zd) representative of said keyword and of a second position (P12) as a function of the stored positions;
- means (MA) for highlighting the position of the extracts in the representation of the audio content.

11. Navigation system (SYS) comprising a playback device according to Claim 10 and at least two loudspeakers.

12. Computer program product comprising instructions for applying the steps of the browsing method according to Claim 1, when it is loaded and executed by a processor.

## Patentansprüche

1. Verfahren zur Navigation in einem Toninhalt (CV), **dadurch gekennzeichnet, dass** mindestens ein Schlüsselwort (MC1) in Zusammenhang mit mindestens zwei Positionen (P11, P12) gespeichert wird, die für mindestens zwei Instanzen des Schlüsselworts im Toninhalt repräsentativ sind, und dass es aufweist:
- einen Schritt der Anzeige (E2) einer Darstellung des Toninhalts;
- bei der Tonwiedergabe des Inhalts, einen Schritt der Erfassung (E6) eines laufenden Auszugs (Zc), der für ein an einer ersten Position (P11) gespeichertes Schlüsselwort (MC1) repräsentativ ist;
- einen Schritt der Bestimmung (E8) mindestens eines zweiten Auszugs (Zd), der für das Schlüsselwort und eine zweite Position (P12) repräsentativ ist, abhängig von den gespeicherten Positionen;
- einen Schritt der Hervorhebung (E10) der Position der Auszüge in der Darstellung des Toninhalts.

2. Navigationsverfahren nach Anspruch 1, **dadurch gekennzeichnet, dass** es nach dem Empfang einer Benutzeranforderung außerdem einen Schritt des Anhaltens der laufenden Tonwiedergabe gefolgt von einem Schritt der Tonwiedergabe des Inhalts ab der zweiten Position enthält.

3. Navigationsverfahren nach Anspruch 1, **dadurch gekennzeichnet, dass** auf die Wiedergabe des laufenden Auszugs ein Schritt der Wiedergabe mindestens eines bestimmten Auszugs folgt.

4. Navigationsverfahren nach Anspruch 1, **dadurch gekennzeichnet, dass** der Toninhalt in Form eines Kreises dargestellt wird, wobei eine Position auf diesem Kreis eine chronologische Position in dem Inhalt darstellt, und dass der Schritt des Hervorhebens einen Schritt der Anzeige eines Links zwischen der ersten und der zweiten Position aufweist.

5. Navigationsverfahren nach Anspruch 1, **dadurch gekennzeichnet, dass**, wenn der Inhalt in Segmente aufgeteilt ist, die Darstellung des Inhalts eine segmentierte Darstellung ist, und der Schritt des Hervorhebens das Hervorheben des Segments, das den laufenden Auszug enthält, und das Hervorheben mindestens eines Segments enthält, das mindestens einen zweiten Auszug enthält.

6. Navigationsverfahren nach Anspruch 5, **dadurch gekennzeichnet, dass** ein dargestelltes Segment von einer Benutzerschnittstelle ausgewählt werden kann.

7. Navigationsverfahren nach Anspruch 4, bei dem die Wiedergabe des Inhalts in einer Einheit von Lautsprechern erfolgt, die räumlich auf einem Kreis angeordnet sind, **dadurch gekennzeichnet, dass** der laufende Auszug in einem ersten Lautsprecher der Einheit wiedergegeben wird, ein bestimmter Auszug gleichzeitig in einem zweiten Lautsprecher der Einheit wiedergegeben wird, wobei die Lautsprecher abhängig von der Position des Auszugs auf dem den Toninhalt darstellenden Kreis ausgewählt werden.

8. Navigationsverfahren nach Anspruch 7, **dadurch gekennzeichnet, dass** dies Lautsprecher virtuelle Lautsprecher eines binauralen Wiedergabesystems sind.

9. Navigationsverfahren nach Anspruch 7, **dadurch gekennzeichnet, dass** der Schallpegel des vom ersten Lautsprecher gesendeten Signals höher als der Schallpegel des vom zweiten Lautsprecher gesendeten Signals ist.

10. Vorrichtung zur Navigation (NAV) in einem Toninhalt (CV), **dadurch gekennzeichnet, dass** sie aufweist
- Speichereinrichtungen (MEM) mindestens eines Schlüsselworts (MC1) zusammen mit mindestens zwei Positionen (P11, P12), die für mindestens zwei Instanzen des Schlüsselworts im Toninhalt repräsentativ sind;
- Anzeigeeinrichtungen (MA) einer Darstellung des Toninhalts;
- Erfassungseinrichtungen (REC), bei der Tonwiedergabe des Inhalts, eines laufenden Auszugs (Zc), der für ein an einer ersten Position (P11) gespeichertes Schlüsselwort repräsentativ ist;
- Bestimmungseinrichtungen (DET) mindestens eines zweiten Auszugs (Zd), der für das Schlüsselwort und eine zweite Position (P12) abhängig von den gespeicherten Positionen repräsentativ ist;
- Hervorhebungseinrichtungen (MA) der Position der Auszüge in der Darstellung des Toninhalts.

11. Navigationssystem (SYS), das eine Wiedergabevorrichtung nach Anspruch 10 und mindestens zwei Lautsprecher enthält.

12. Computerprogrammprodukt, das Anweisungen zur Durchführung der Schritte des Navigationsverfahrens nach Anspruch 1 enthält, wenn es in einen Prozessor geladen und von diesem ausgeführt wird.
